# EUROPEAN PATENT APPLICATION

(11) **EP 4 733 288 A1**
(43) Date of publication of application: **29.04.2026**
(21) Application number: 24208560.3
(22) Date of filing: 24.10.2024
(51) Int. Cl.: C04B 35/58, C25C 3/08, C25C 3/18

(54) **PROCESS FOR ENHANCING CATHODE LIFETIME IN ELECTROLYTIC CELLS FOR THE HALL-HÉROULT PROCESS**

(71) Applicant: Dubai Aluminium PJSC, Dubai (AE)
(72) Inventor: BANJAB, Ali Jasim, Sharjah (AE); ALKAZ, Wafa, Sharjah (AE); BORAIE, Mohamed Tawfik, Sharjah (AE)
(74) Representative: IXAS Conseil

(57) **Abstract**

Method for increasing the average operating lifetime of cathodes in a Hall-Héroult electrolysis cell, comprising the following steps:
- providing titanium diboride granules made from titanium diboride powder, or aluminium tablets or ingots containing such titanium diboride granules,
- providing one or more holes into the crust of an operating Hall-Héroult electrolytic cell,
- introducing said granules, or at least one aluminium tablet or ingot containing said granules, through said at least one hole into said operating Hall-Héroult electrolytic cell,
wherein said titanium diboride granules present the following properties:
- a compressive strength, measured as the maximum force before rupture in a compression test, of at least 10 N and preferably at least 20 N; and
- they are made from granules made from TiB₂ powder that has a D₅₀ value comprised between about 2 µm and about 8 µm, and preferably comprised between about 3 µm and about 7 µm, and even more preferably between about 4 µm and about 6 µm; and
- they have an alumina content less than about 1.5 % by weight, and preferably less than about 1.3 % by weight, and still more preferably less than about 1.2 % by weight; and
- said TiB₂ powder and/or the granular material itself has undergone calcination at a temperature above about 1 900 °C and preferably above 1 950 °C, and even more preferably at a temperature comprised between 1 950 °C and about 2 050 °C.

## Description

### Technical field of the invention

The invention relates to the field of fused salt electrolysis using the Hall-Héroult process for making aluminium. More specifically it relates to the improvement of the lifetime of cathode blocks used in electrolysis cells for the Hall-Héroult process, the improvement being related to the application of a coating by TiB₂ particles onto the upper surface of the cathode block. These TiB₂ particles have specific features which are in particular related to their grain size and shape. Said coating can be applied to the cathodes of electrolysis cells which in operation, by pouring TiB₂ powder into the cell.

### Prior art

The Hall-Héroult process is the only continuous industrial process for producing metallic aluminium from aluminium oxide. Aluminium oxide (Al₂O₂) is dissolved in molten cryolite (Na₃AlF₆), and the resulting mixture (typically at a temperature comprised between 940 °C and 970 °C) acts as a liquid electrolyte in an electrolytic cell. An electrolytic cell (also called "pot") used for the Hall-Héroult process typically comprises a steel shell (so-called pot shell), a lining (comprising insulating panels and refractory bricks protecting said steel shell against heat, and cathode blocks usually made from graphite, anthracite or a mixture of both), and a plurality of anodes (usually made from carbon) wherein part of anodes is submerged into the liquid electrolyte contained in the volume defined by the cathode bottom and a side lining made from carbonaceous material. Anodes and cathodes are connected to external busbars. An electrical current is passed through the cell (typically at a voltage between 3.5 V and 4.40 V) which electrochemically reduces the aluminium oxide, split in the electrolyte into aluminium and oxygen ions, then into aluminium at the cathode and oxygen at the anode; said oxygen reacts with the carbon of the anode to form carbon dioxide. The resulting metallic aluminium is not miscible with the liquid electrolyte, has a higher density than the liquid electrolyte and will thus accumulate as a liquid metal pad on the cathode surface below the electrolyte from where it needs to be removed from time to time, usually by suction into a crucible (so-called "tapping" operation).

The electrical energy is a major operational cost in the Hall-Héroult process. Capital cost is an important issue, too. Ever since the invention of the process at the end of the 19^{th} century much effort has been undertaken to improve the energy efficiency (expressed in kW/h per kg or ton of aluminium produced), and there has also been a trend to increase the size of the pots and the current intensity at which they are operated in order to increase the plant productivity and bring down the capital cost per unit of aluminium produced in the plant.

Industrial electrolytic cells used for the Hall-Héroult process are generally rectangular in shape and connected electrically in series, the ends of the series being connected to the positive and negative poles of an electrical rectification and control substation. The general outline of these cells is known to a person skilled in the art and will not be repeated here in detail. They have a length usually comprised between 8 and 25 meters and a width usually comprised between 3 and 5 meters. The cells (also called "pots") are always operated in series of several tens (up to more than four hundred) of pots (such a series being also called a "potline"); within each series DC currents flow from one cell to the neighbouring cell. The electrical currents in most modern electrolytic cells using the Hall-Héroult process exceed 200 kA and can reach 400 kA, 470 kA or even more; in these potlines the pots are arranged side by side. Most newly installed pots operate at a current comprised between about 350 kA and 600 kA, and more often in the order of 400 kA to 500 kA. The passage of these enormous current intensities through the electrolytic cell leads to ohmic losses at various locations of the pot and its environment.

Cathode assemblies for use in electrolytic cells suitable for the Hall-Héroult process are industrially manufactured for more than a century, and the state of the art is summarized in the reference book *"*Cathodes in Aluminium Electrolysis" by M. Sortie and H. Øye, 3rd edition (Düsseldorf 2010). They comprise a cathode body made from a carbon material and one or more metallic collector bars that are fitted into slots or grooves machined into the lower surface of said carbon body. Said metallic collector bars protrude out of each end of the cathode block, thereby allowing to connect the cathode assembly to the cathode busbar system. The metallic collector bars are usually made from steel; copper inserts within the steel bar can be used in order to increase the electrical conductivity of the cathode bar.

Cathode assemblies are arranged in the bottom of the potshell such that the upper surface of the cathode blocks in the Hall-Héroult cell usually forms a flat, continuous carbon surface; any joints between two adjacent cathode blocks as well as in the peripheral seam are filled and sealed with a carbonaceous paste (so-called ramming paste) to avoid penetration of liquid metal. The lifetime of cathodes is limited mainly by their erosion due to movement of the metal induced by electromagnetic forces, as well as by secondary chemical reactions at the cathode and penetration of foreign atoms into the carbon material.

The normal lifetime of a cathode lining is typically comprised between five and seven years. The electrolytic cell needs then to be shut down and electrically disconnected, the spent cathode lining will be taken out and replaced by a new one; the renewed cell can then be restarted.

To enhance the lifetime of carbonaceous cathodes used for the Hall-Héroult process, it has been proposed to apply coatings onto the cathode surface which are hard, electrically conductive and chemically inert, such as refractory metallic compounds (usually called refractory hard materials, abridged RHM). Such a coating can also be obtained from a mixture of refractory powder and carbonaceous paste. It has also been proposed to cover the upper cathode surface with tiles made from RHM. It is known that TiB₂ surfaces have a good wettability with respect to liquid aluminium, much better than carbon surfaces. Moreover, TiB₂ has a good electrical conductivity, and as a consequence, the increase in series resistance of the cell (and therefore the decrease in energy efficiency of the electrolysis cell) due to the addition of a TiB₂ coating of the cathode would be rather limited.

There is a huge prior art related to the use of carbides and borides of titanium, zirconium, tantalum and niobium in relation with Hall-Héroult electrolytic cells, such as US 3,081,972.

Coating the upper cathode surface with a sol of particulate refractory material or with a silicate solution is described in FR 2 051 670. Other surface layers obtained from TiB₂ powder are described in EP 0 021 850. Colloidal systems comprising particulate RMH in a colloidal carrier such as alumina have been described in the publication *"*Properties of a colloidal alumina-bonded TiB2 coating on cathode carbon materials" by H. Øye, TMS 1997, p.279-286, and in WO 93/25731.

RHM tiles are described for instance in US 4,224,128. GB 802,905 describes a process of plating of the carbon cathodes with plates made by compacting and sintering TiB₂ powder.

A large number of documents describe the use of carbonaceous pastes containing TiB₂ particles, see for instance US 4,308,115, EP 0 047 227, US 4,466,996 , US 4,526,911 , EP 2 589 675, WO 2012/031759 and WO 84/00566, as well as several publications by M.O. Ibrahiem, T. Foosnaes and H.A. Øye : "Pitch-bonded TiB2 coating on carbon cathodes" by Proc. 12th Arab Int. Aluminum Conference (arabal-2006), *"*Stability of TiB2 - C composite coatings", Light Metals 2006, p.691-696, and *"*Chemical stability of pitch-based TiB2 - C coatings on carbon cathodes", Light Metals 2007, p.1041-1046. FR 1 205 857 describes the hot compression of a paste comprising TiB₂ particles. Cermet materials made from TiB₂ and an oxide such as alumina are described in EP 0 116 809.

In order to decrease the cost of these RHM materials and coatings it has also be proposed to form TiB₂ *in situ* from mixtures comprising inexpensive precursors such as TiO₂ and B₂O₃, see for instance US 5,342,491 for the fabrication of tiles and bricks, or US 4,605,634 (sintered TiB₂ bodies from AlB₂ and TiO₂), or US 4,465,581 (TiB₂ - graphite composites from mixtures comprising TiOz + C + B₂O₃ or HBO₃).

M. Mohamed AIJallaf et al. ("The effect of TiB2 granules on metal quality", Light Metals 2011, p.745-750; *"*Simplifying protection system to prolong cell life", Light Metals 2011, p.1079-1084; M.M. Khalifa AIJallaf, PhD Thesis, University of Auckland, 2011) have described real size tests in industrial Hall-Héroult electrolytical cells with TiB₂ particulate material of an initial thickness of coverage in the order of 18 mm. Cathode erosion rate was reduced, but data on metal purity and inclusions were not conclusive. In these trials, TiB₂ particulate material was added to an operating electrolysis cell through openings in the crust of the bath. The particulate material will spread over the upper cathode surface and accumulate in depressions caused by localised erosion. WO 2013/026674 describes TiB₂ granules of well-defined shape obtained from TiB₂ powder and an oxidic binder and adjuvants. TiB₂-Al tablets manufactured from TiB₂ granules and liquid aluminium have also been used. These granules have a good crushing strength and do not readily disintegrate when dumped into the cell; this is supposed to limit their corrosion in the cryolite bath as well as pollution of the liquid metal with insoluble particulate matter.

There are several general problems related to these approaches. One is cost: TiB₂ and similar refractory hard materials are expensive. Moreover, such a coating or cladding should not lead to an additional voltage drop in the cell which would increase energy consumption per ton of aluminium produced. Another issue is about particles in the liquid metal: RHM coating are made from particulate material, these particles would form inclusions in the metal and should therefore not be carried over in the liquid aluminium that is tapped from the cell. Yet another issue is metal purity: the powder particles should not be dissolved by the liquid aluminium such as to increase the titanium and boron level of the liquid aluminium. A high boron level may also lead to the precipitation of insoluble, hard borides, such as aluminium borides and carbon borides. Depending on their size, shape and hardness, such inclusions may interfere with certain downstream processes for making wrought products, depending on their quantity and size. Hard inclusions can also degrade the machinability of aluminium products in general and induce high tool wear. And at last, but not at least, TiB₂ in the form of small particles is difficult to use for direct addition to the cell bath, because it tends to agglomerate. While the presence of particles in liquid aluminium can be decreased by various metal treatment processes such as decantation and/or filtering, this would add cost.

It may be for the cumulation of these various reasons that none of these different approaches has found a significant use in Hall-Héroult electrolysis plants. The present invention tries to solve at least some of the drawbacks of prior art.

### Objects of the invention

The inventors have found that the approach described in WO 2013/026674 leads to an unacceptable increase in titanium, boron and inclusion levels in the liquid primary aluminium. They have found that this situation can be improved in a surprising manner when the mean size of TiB₂ particles from which the granules are made is decreased from about 11 µm to about 5 µm.

According to an essential aspect of the invention, said granules present the following properties:
- They are made from granules made from TiB₂ powder that has a D₅₀ value comprised between about 2 µm and about 8 µm, and preferably comprised between about 3 µm and about 7 µm, and even more preferably between about 4 µm and about 6 µm; and
- The granules have an alumina content less than about 1.5 % by weight, and preferably less than about 1.3 % by weight, and still more preferably less than about 1.2 % by weight.

The observation that these granules lead to a lower boride level in the metal than comparable granules made from bigger TiB₂ particles is surprising because it can be expected that smaller particles would dissolve more readily and lead to higher uptake of boron and titanium by the liquid aluminium.

A first object of the invention is a method for increasing the average operating lifetime of cathodes in a Hall-Héroult electrolysis cell, comprising the following steps:
- providing titanium diboride granules made from titanium diboride powder, or aluminium tablets or ingots containing such titanium diboride granules,
- providing one or more holes into the crust of an operating Hall-Héroult electrolytic cell,
- introducing said granules, or at least one aluminium tablet or ingot containing said granules, through said at least one hole into said operating Hall-Héroult electrolytic cell, wherein said titanium diboride granules present the following properties:
- they exhibit a compressive strength, measured as the maximum force before rupture in a compression test, of at least 10 N and preferably at least 20 N; and
- they are made from granules made from TiB₂ powder that has a D₅₀ value comprised between about 2 µm and about 8 µm, and preferably comprised between about 3 µm and about 7 µm, and even more preferably between about 4 µm and about 6 µm; and
- the granules have an alumina content less than about 1.5 % by weight, and preferably less than about 1.3 % by weight, and still more preferably less than about 1.2 % by weight; and
- said TiB₂ powder and/or the granular material itself has undergone calcination at a temperature above about 1 900 °C and preferably above 1 950 °C, and even more preferably at a temperature comprised between 1 950 °C and about 2 050 °C.

According to a first advantageous embodiment, at least two of the three size parameters minimum diameter, maximum diameter, and height of said granules are comprised between about 3 mm and about 7.5 mm, preferably between about 4 mm and about 6.5 mm, and still more preferably between about 4.5 mm and about 6.0 mm.

According to a second advantageous embodiment, which can be combined with the first one, said compression strength is above 100 N.

According to a third advantageous embodiment, which can be combined with the first one and/or with the second one, said D₅₀ value is comprised between about 4 µm and about 6 µm, and said alumina content is less than about 1.3 % by weight. Preferably, said alumina content is less than about 1.2 % by weight.

According to a fourth advantageous embodiment, which can be combined with the first one and/or with the second one and/or with the third one, said Hall-Héroult cell operates at a current higher than 400 kA, preferably higher than 460 kA, and preferably higher than 520 kA.

According to a fifth advantageous embodiment, which can be combined with the first one and/or with the second one and/or with the third one and/or with the fourth one, said steps are carried out during anode replacement.

According to a sixth advantageous embodiment, which can be combined with the first one and/or with the second one and/or with the third one and/or with the fourth one and/or with the fifth one, the step of introducing is carried out for the first time after about 500 days, and preferably after about 700 days of continuous operation of the Hall-Héroult cell with new cathode blocks.

According to a seventh advantageous embodiment, which can be combined with the first one and/or with the second one and/or with the third one and/or wth the fourth one and/or with the fifth one and/or with the sixth one, the step of introducing is carried out for the first time after about 700 days to about 1000 days of continuous operation of the Hall-Héroult cell with new cathode blocks.

According to an eighth advantageous embodiment, which can be combined with the first one and/or with the second one and/or with the third one and/or with the fourth one and/or wth the fifth one and/or with the sixth one and/or with the seventh one, a quantity of of TiB₂ granules of about 5kg to about 30 kg, preferably of about 8 kg to about 25 kg, and more preferably of about 10 kg to about 20 kg, is used for each introduction through said hole. This may also also apply when the granules are contained in aluminium tablets or ingots. According to a ninth advantageous embodiment, which can be combined with the first one and/or with the second one and/or with the third one and/or with the fourth one and/or wth the fifth one and/or with the sixth one and/or with the seventh one and/or with the eighth one, said TiB₂ granules are contained in at least one bag upon introduction.

### Figures

Figures 1 to 16 relate to Example 1 which is based on an embodiment of the present invention.
Figure 1 shows a photograph of TiB₂ granules used for the present invention. The length bar corresponds to 5 mm.
Figures 2, 3 and 4 shows X-ray tomographic images of TiB₂ granules used for the present invention. The length bar corresponds to 1 mm.
Figure 5 relates to the granules of figures 2, 3 and 4, and shows a grain size diagram based on measurements carried out on X-ray tomographic images.
Figure 6 shows the particle size distribution by weight of the granules of figures 2, 3 and 4.
Figure 7 shows results of chemical analysis of these TiB₂ granules by IPC.
Figure 8 shows results of chemical analysis of these TiB₂ granules by XRF.
Figure 9 relates to a test of chemical reactivity with molten aluminium of the TiB₂ granules used for the present invention and shows results of an ICP analysis of molten aluminium that has been in contact with these granules for three different durations.
   On the left-hand side: boron concentration. On the right-hand side: titanium concentration.
Figure 10 relates to a test of chemical reactivity with molten cryolite of the TiB₂ granules used for the present invention and shows results of an ICP analysis of molten cryolite has been in contact with these granules for three different durations.
   On the left-hand side: boron concentration. On the right-hand side: titanium concentration.
Figure 11 shows the compressive strength of these TiB₂ granules.
Figure 12 shows a typical stress-strain curve of a typical single TiB₂ granule.
Figure 13 shows photographs of typical TiB₂ granules before (left) and after (right) exposure to sodium vapor.
Figure 14 shows the weight gain of four TiB₂ granules after exposure to sodium vapor.
Figures 15 and 16 show PoDFA micrographs obtained by an inverted metallurgical microscope. The length bar corresponds to 20 µm.

### Detailed description

The present invention applies to cathodes used in the Hall-Héroult process. The cathodes form the bottom of an electrolysis cell. The bottom is usually initially flat but may then mechanically erode over time as the liquid aluminium is moving or electrochemically through current flow in cathode.

It is known that TiB₂ has a very low solubility in liquid aluminium. It is also known to add TiB₂ powder to liquid aluminium in order to favour the obtention of specific solidification structures. In primary aluminium (i.e. aluminium produced by the Hall-Héroult process) boron and titanium are rated as "unavoidable impurities", and their presence is generally undesirable. The present inventors have found that granules as described in WO 2013/026674 lead to slightly increased titanium and boron levels; this is a drawback for using such granules is Hall-Héroult electrolytical cells. Furthermore, the presence of insoluble particles and inclusions in primary aluminium may be undesirable as it may have negative influence on deformation properties of aluminium and aluminium alloys made from such primary metal.

The inventors have found that compared to the granules described in WO 2013/026674, which are made from TiB₂ power with an average grain size of about 11 µm, the use of smaller powder particles leads to granules which show a better behaviour in the Hall-Héroult cells. This better behaviour is related to at least two factors.

A first factor is a slightly lower titanium and lower boron uptake of the liquid aluminium. This is surprising because smaller particles would be expected to dissolve more readily than larger particles. According to an essential feature of the present invention, the average grain size of TiB₂ powder used in this hot sintering method is smaller than that described in WO 2013/026674. Said grain size of powder particles must have a D₅₀ value comprised between about 2 µm and about 8 µm, and preferably comprised between about 3 µm and about 7 µm, and even more preferably between about 4 µm and about 6 µm.

A second factor is the lower level of inclusions that are carried into the liquid metal. Ensuring metal cleanliness is vital for producing high-quality ingots, extrusions, and sheets. It is known that contaminants from foreign materials such as TiB₂ or oxide skins can compromise product integrity.

The TiB₂ granules as used in the method according to the present invention can be manufactured by the hot sintering method described in WO 2013/026674. The inventors have found that the granules should have an alumina content less than about 1.5 % by weight, and preferably less than about 1.3 % by weight, and still more preferably less than about 1.2 % by weight.

Preferably, the powder and/or the granular material has undergone calcination at a temperature above about 1900 °C and preferably above 1950 °C, and even more preferably at a temperature comprised between 1950 °C and about 2050 °C.

The influence of the calcination temperature is rather complex. The inventors believe that at higher calcination temperature, there is a greater chance for the formation of purer TiB₂, as high temperatures can help driving off any residual impurities or unreacted precursors, leading to a more complete conversion of raw materials to TiB₂. Increasing the calcination temperature can also enhance the crystallinity of TiB₂; particles having a well-ordered crystal structure may exhibit better mechanical properties than less ordered particles. Higher calcination temperature also leads to denser TiB₂ particles with less porosity, which improves mechanical strength and thermal conductivity. Higher thermal conductivity is desirable when the material is used as a coating on cathodes because it improves heat dissipation. Improved mechanical properties are desirable for hardness and wear resistance; these two properties are improved by better crystallinity and reduced porosity. Higher purity and higher crystallinity also lead to particles with enhanced chemical stability, in particular regarding resistance to oxidation and other chemical reactions.

The inventors have carried out industrial scale tests with TiB₂ granules similar to those described in WO 2013/026674. Treating the cathodes using the approach described in this patent application induces a cost of TiB₂ material in the order of about 10 000 to 20 000 US-$ per electrolysis cell, depending on the quantity of TiB₂ used and on the market price, but may increase the cell life by about 500 days if the failure mode is due to cathode failure. Liquid aluminium produced by such as cell was found to have higher impurity level than without the TiB₂ treatment: the titanium level went up by about 25 ppm, whereas the boron level increased by about 10 ppm. This increase in impurity level did not depend much on the quantity of TiB₂ granules that were used: for two nominally identical cells the addition of 290 kg or 400 kg of TiB₂ granules resulted in the same increase in Ti and B levels. This high level in titanium and boron is problematic, as it induces the formation of hard inclusions, the removal of which (by decantation and/or filtration) would be costly.

In an advantageous embodiment of the invention, the TiB₂ is introduced into the electrolysis cell during anode replacement. After removal of the spent anode TiB₂ can be added in the cavity. Typically, 10-20 kg of TiB₂ can be used for each introduction. The TiB₂ granules can be added as loose granules or can be contained in a bag filled with an appropriate quantity of loose granules or can be contained in one or more aluminium tablets or ingots.

The step of introducing can be carried out anytime during the lifetime of the cathode blocks. The inventors have found that its is particularly advantageous to introduce the granules after a certain time of continuous cell operation only. More precisely, cathode erosion will start to occur after a few hundreds of hours of operation. When the granules are added to electrolysis cells showing a certain degree of cathode erosion, the granules will tend to smooth out such erosion. Advantageously, granules are introduced for the first time after about 500 days, and preferably after about 700 days of continuous operation of the Hall-Héroult cell with new cathode blocks. The best results have been obtained after about 700 days to about 1000 days of continuous operation.

### Examples

### Example 1: Physical and chemical characterization of TiB₂ granules that can be used for the invention

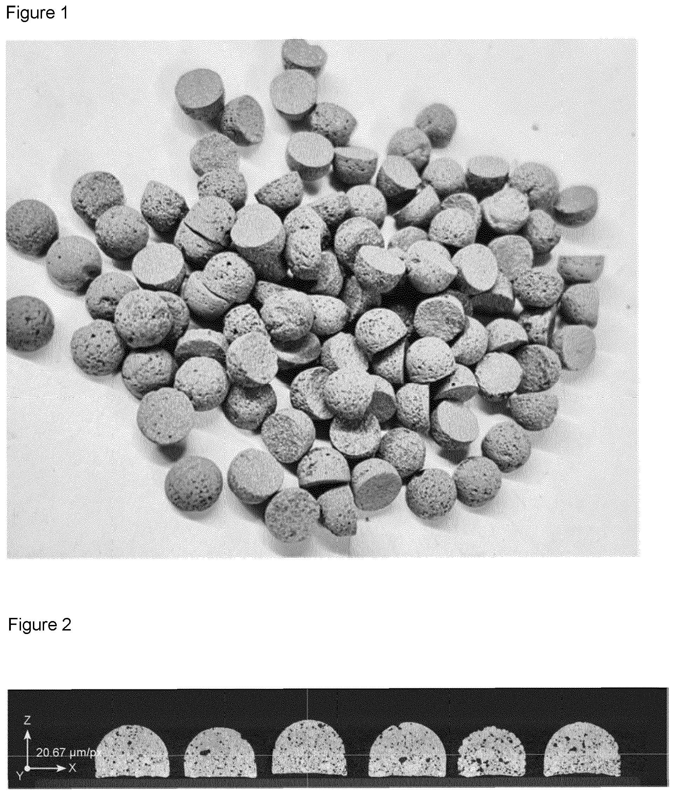

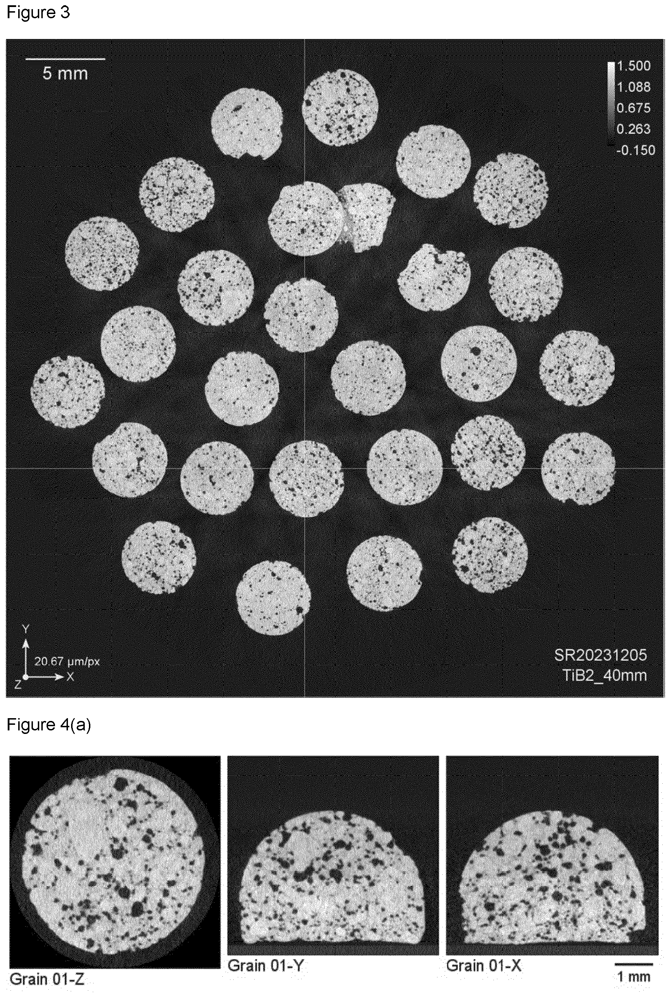

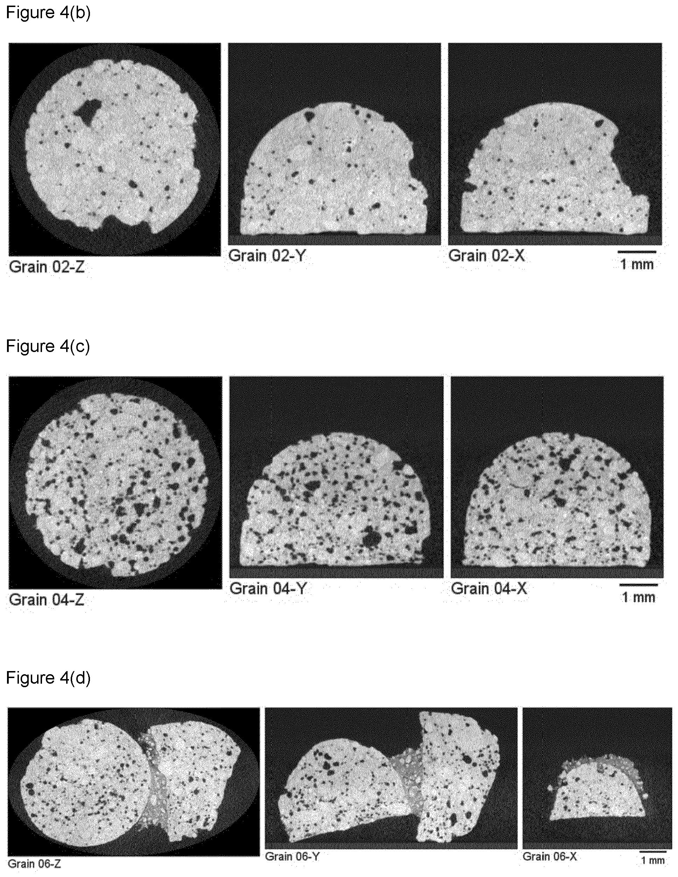

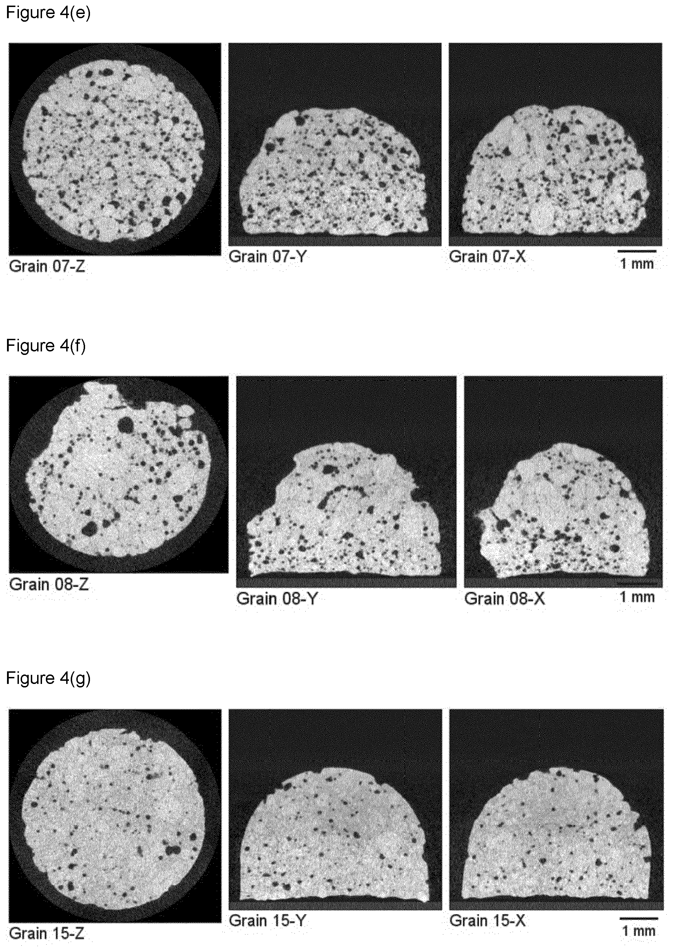

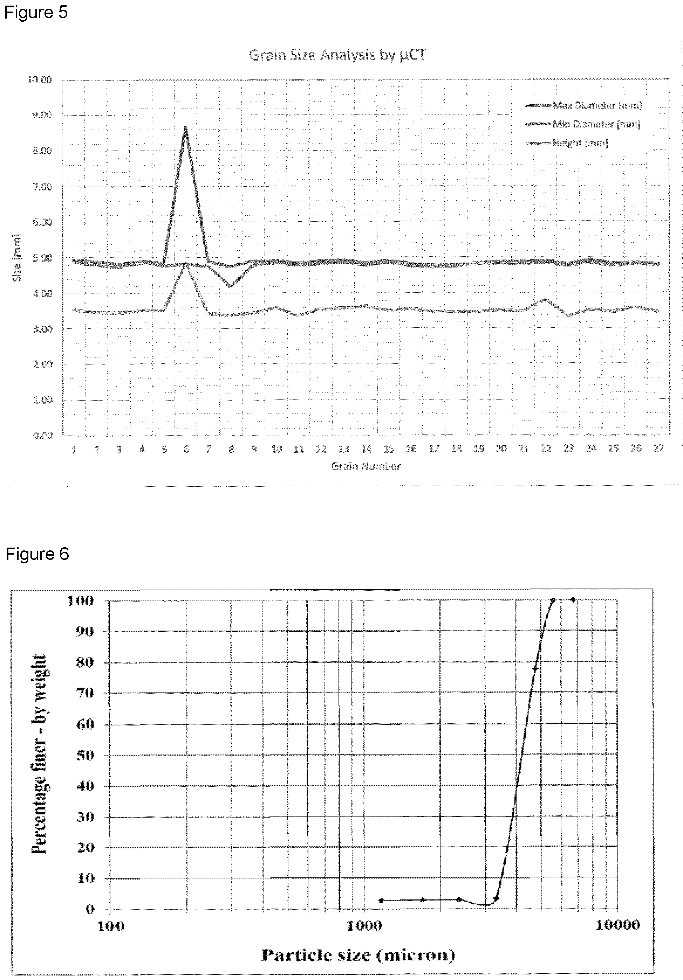

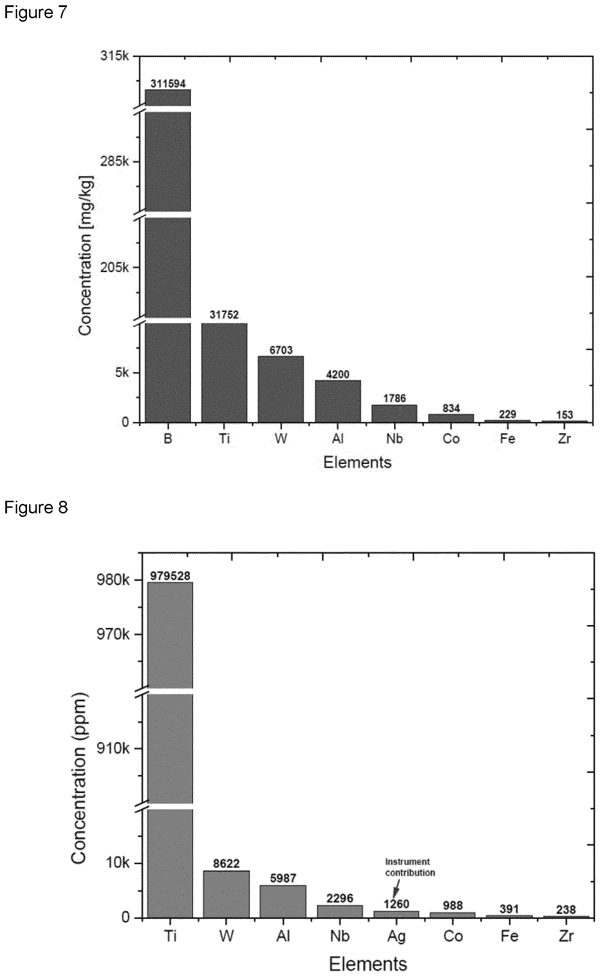

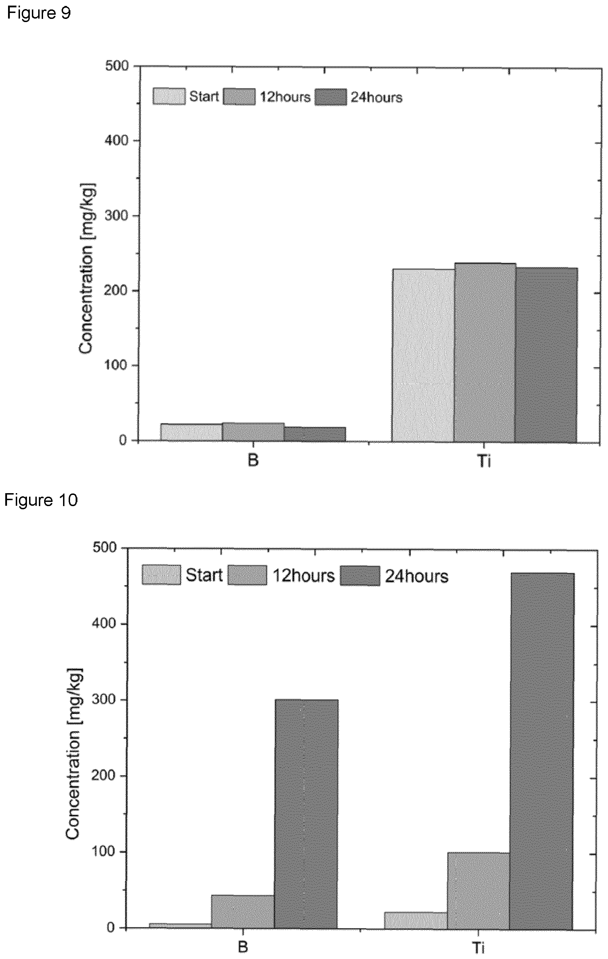

We describe here the characterisation of TiB₂ powder granules which may be used in a method according to the invention. Figure 1 shows a photograph of such granules.
a) X-ray microtomography (abridged here as "µCT") has been used for characterisation of the morphology of the granules. The data were acquired by a Nikon 1 compact large-envelope 5-axis X-ray µCT instrument. 27 single granules were taken randomly from a bag of samples and analysed without any specific sample preparation. Typical images are shown on figure 2 (x-y plane) and figure 3 (x-z plane). Figures 4(a) through (g) show views (three view for each figure) of seven different granules. As can be seen, there are variation from grain to grain. The overall structure is porous, with irregularly distributed large pores.
b) Particle size distribution of the same 27 granules was determined using a Coulter LS particle size analyser; about 150 g of granules were used for the analysis. Results are shown on figure 5 for minimal diameter (middle curve), maximum diameter (upper curve) and height (lower curve). Mean values for maximum diameter were (5 ± 0.73) mm, for minimum diameter (4,78 ± 0.13) mm, for height (3,56 ± 0.27) mm. It should be noted that the high standard deviation for maximum diameter is mainly due to one single grain exhibiting an irregular shape. Figure 6 shows the particle size distribution by weight.
c) Bulk density of the granules was measured by filling a 1-liter graduated vessel with the granules and determining the mass. The real density was measured by first determining the true volume of a given mass of the granules using an AccuPyc 1360 Helium gas pycnometer. The true or real density was then calculated using the mass and true volume. Bulk density was measured to be 1 290 kg/m³, the real density was measured to be 4 450 kg/m³.
d) Chemical composition of the TiB₂ granules was determined using both inductive coupling plasma (ICP) and X-ray fluorescence (XRF) techniques. Results from ICP analysis are shown on figure 7, result from XRF analysis on figure 8. It should be noted that XRF does not detect boron. The high silver content in the XRF analysis is an artefact from the measurement instrument.
e) Chemical reactivity with molten aluminium was determined by adding a given amount of TiB₂ granules to a given amount of molten aluminium for a duration of 12 hours and 24 hours. Results are shown in Figure 9. Chemical analysis by ICP was carried out on solidified aluminium samples which were analysed for boron (left-hand side) and titanium (right-hand side). For each of boron and titanium, the middle bar refers to a contact time of 12 hours, the right-hand bar to 24 hours, the left-hand bar to 0 hours.

A similar test was carried out in contact with molten cryolite, and the results obtained on solidified cryolite samples is shown on figure 10. For each of boron and titanium, the middle bar refers to a contact time of 12 hours, the right-hand bar to 24 hours, the left-hand bar to 0 hours.

### f) Electrical resistivity at ambient temperature

Electrical bulk resistivity was measured by transmitting an electrical pulse through a bed of the granular material under test, while simultaneously recording the voltage and current across a specified distance of 10 cm. The granular material was placed in an alumina tube placed within a graphite crucible. Two molybdenum wires, spaced 10 cm apart, were used as electrodes for current and voltage measurement, and a graphite electrode, with the graphite crucible serving as the second electrode, generates the electrical pulse of 400 msec duration. These electrodes are connected to a rectifier, regulating the voltage levels passing through the sample. The average specific resistivity was determined as 0.623 mOhm x m from four individual samples (individual measurements: 0.629, 0.615; 0.639, 0.609).

### g) Cold compressive strength

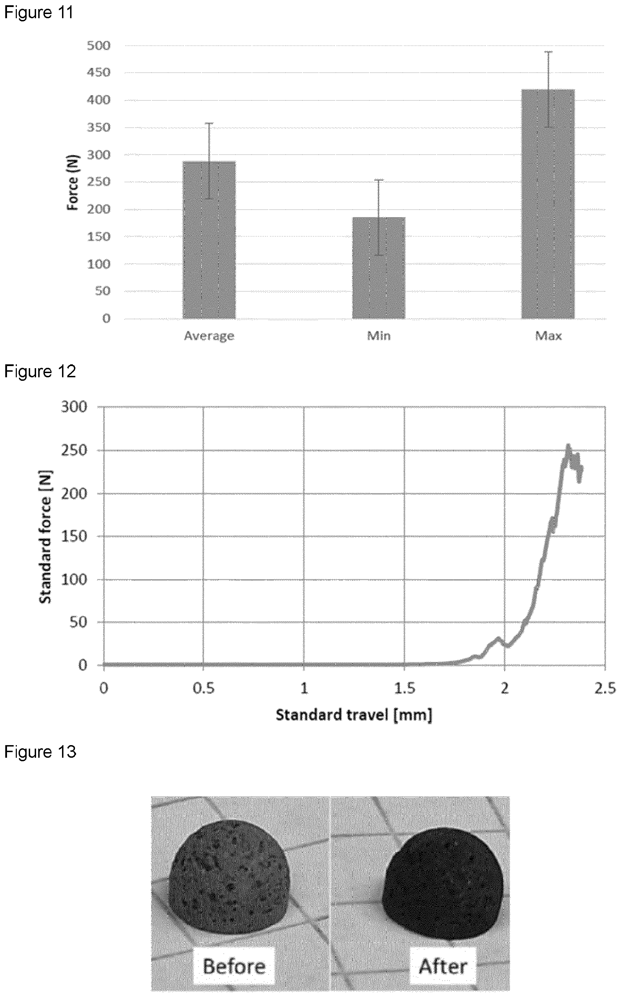

Compression tests were carried out using a Zwick Reol compression tester with a maximum load capacity of 2 500 N. The testing head advanced at a constant rate of 2 mm/minute, and the resulting load was recorded. Ten TiB₂ granules were tested until failure or until the original height had been sufficiently reduced. The average, minimum and maximum peak loads were calculated. Results are shown on figure 11. Figure 12 shows a typical stress-strain curve of a typical single granule. The small dip around 25 N and between 165 N and 250 N is due to the breaking of layers.

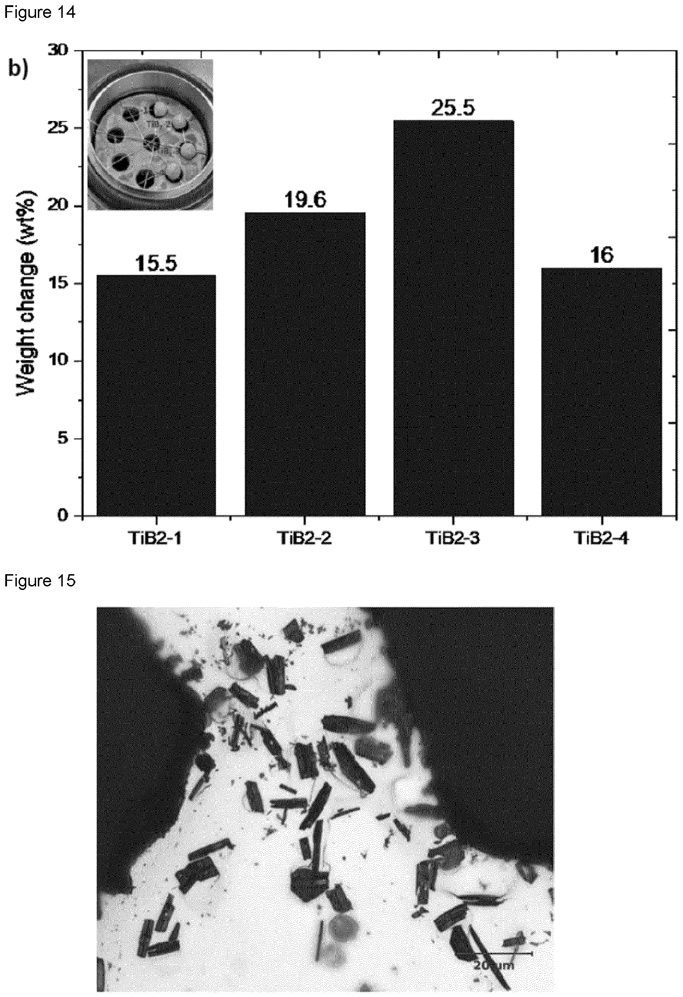

h) Sodium resistance test was conducted in a two-zone furnace where TiB₂ granules were exposed to sodium vapor over a period of 24 hours. The samples (prior to sodium exposure and after sodium exposure) were then crushed into powder using a lab-scale mortar and pestle before analysis using powder X-ray diffractometry. Figure 13 shows photographs of a typical TiB₂ granule before and after exposure to sodium vapor. Figure 14 shows the weight gain of four TiB₂ granules after exposure in percent. X-ray diffractograms show before exposure small contributions of NbO, Ti₂O_{0.33}, TiFe, TiO₂ (rutile), Zr₅Ti₇O₂₄ zirconium titanate / titanium zirconium oxide, and Ti_{0.91} W_{0.29} B₂. After sodium exposure specific phases ca n be seen: sodium borate NaBO₂ and sodium titanium oxide γ-Na₂TiO₃ along with Ti_{0.91}W_{0.29}B₂.

### h) PoDFA sampling

The PoDFA (Porous Disc Filtration Apparatus) provides a comprehensive method for measuring inclusions in aluminium melts, crucial for assessing metal cleanliness. This technique filters a defined volume of molten aluminium through a porous disc, identifying and quantifying various inclusions based on a classification atlas.

A lab-scale study was conducted prior to industrial trials to examine the reactivity of different TiB₂ granules/materials and minimize their impact on metal quality, helping select the least reactive material for larger-scale testing.

In the experiment, 2.5 kg of pure liquid aluminium was mixed with 40 grams of TiB₂ granules in a ceramic crucible and heated in a 900°C furnace for 20 hours. The process included moderate stirring to simulate conditions in Hall-Héroult electrolytic cells. After stirring, the ceramic crucible was returned to the muffle furnace at the same temperature for an additional reaction period of 4 hours.

To assess the quality of the melt a PoDFA sampling was carried out to evaluate inclusions and detect any new species. Key parameters, such as maintaining a metal temperature above 750°C and filtering at least 0.5 kg of material, were essential for accurate PoDFA analysis. The sample was subjected to mechanical preparation and subsequently analysed using an inverted metallurgical microscope. The grid method was employed to accurately quantify and classify the types and sizes of inclusions present in the sample.

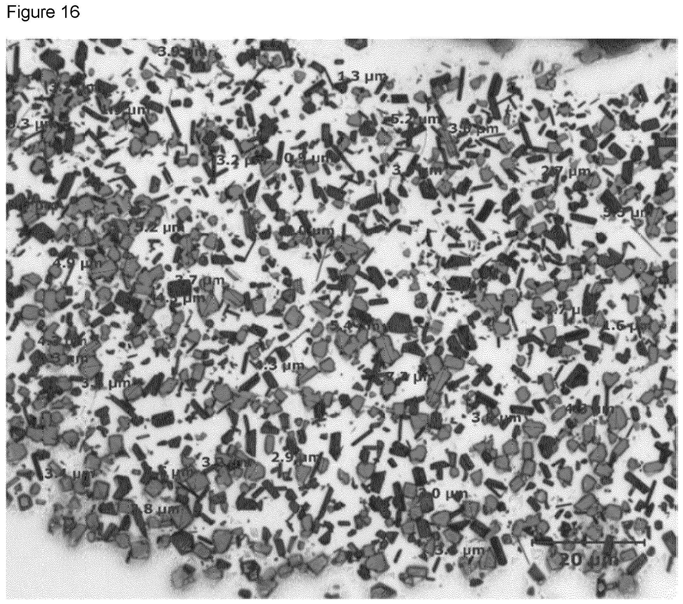

Figure 15 and figure 16 show typical PoDFA micrographs obtained on an inverted metallurgical microscope. The scale bar corresponds to a length of about 20 µm. Carbide phases as well as TiVB phases can be identified here.

### Example 2: Behaviour of TiB₂ granules of different powder size in liquid aluminium

In a first series of tests, different types of TiB₂ granules were put into contact with liquid aluminium. More precisely, 2.5 kg of liquid aluminium were loaded in a ceramic crucible and heated at 900 °C in a muffle furnace, and then 80 grams of TiB₂ granules were added. The ceramic crucible remained in the furnace at 900 °C for 24 hours. Then a sample of liquid metal for chemical analysis by OES (Optical Emission Spectroscopy) was taken, and the rest of the liquid metal was submitted to conventional PoDFA sampling of inclusions. Sampling and analysis of inclusions by the PoDFA (Porous Disc Filtration Apparatus) technique is familiar to the person skilled in the art and will not be described here in more detail.

For samples V1 to V8, the TiB₂ granules used in this experiment were similar to those described in WO 2013/026674, except for variations in grain size of the powder (5 µm or 15 µm) from which the granules were made, for binder content (1.20 wt.-% or 2.4 wt.-%) and calcination temperature (1400 °C or 1600 °C). Sample V9 was not in the form of sintered granules but came as large homogeneous particles. Results are shown in Table 1.

**Table 1**

| Sample | Grain size D₅₀ [µm] | Binder content [wt.-%] | Calcination temperature [°C] | Inclusion [mm²/kg] |
|---|---|---|---|---|
| V1 | 15 | 1,20 | 1400 | 0.172 |
| V2 | 15 | 2,40 | 1400 | 0.035 |
| V3 | 5 | 1,20 | 1400 | 0.094 |
| V4 | 5 | 2,40 | 1400 | 0.223 |
| V5 | 15 | 1,20 | 1600 | 0.016 |
| V6 | 15 | 2,40 | 1600 | 0.239 |
| V7 | 5 | 1,20 | 1600 | 0.030 |
| V8 | 5 | 2,40 | 1600 | 0.382 |
| V9 | 2 - 5 mm | n.a. | n.a. | 0.277 |

It can be seen that samples V2, V5 and V7 had the lowest inclusion level.

All samples showed an increase in boron content (by about 12 ppm to 19 ppm) whereas titanium and vanadium levels were reduced: titanium by about 5 ppm to 18 ppm, vanadium by about 9 ppm to 28 ppm. Levels of virgin metal were as follows: titanium 47 ppm, boron 2 ppm, vanadium 200 ppm.

In a second series of tests, the test according to the first series was repeated using fresh liquid aluminium and granules which had already undergone the first series of tests. The data are shown in table 2 for those granules which performed best in the first series of tests.

**Table 2**

| Sample | Grain size D₅₀ [µm] | Binder content [wt.-%] | Calcination temperature [°C] | Inclusion [mm²/kg] |
|---|---|---|---|---|
| V2 | 15 | 2,40 | 1400 | 0.241 |
| V5 | 15 | 1,20 | 1600 | 0.479 |
| V7 | 5 | 1,20 | 1600 | 0.141 |

It can be seen that the reaction with liquid metal and formation of borides is a continuous process and cannot be avoided. However, the number of inclusions is not the same for all the samples: sample V7 performs best. Moreover, sample V7 was the only one which did not show any other inclusions than TiB₂, such as Ti(V)B₂ and AlB₂ which are formed from the reaction of TiB₂ with liquid aluminium.

In a third series of test, the test according to the first series was repeated using fresh liquid aluminium and fresh granules, under the same conditions as in the first test, but the contact time between the liquid aluminium and the granules was 7 days. Inclusions were analysed by the PoDFA technique. Compared to any other of the samples, sample V7 granules showed relatively lower level of total inclusions, and boride species that were smaller. It was however found that even with this sample V7 the level of boride inclusions was too high.

### Example 3: Influence of calcination temperature

Two samples called "44/19" and "45/19" were submitted to the same type of test as described in Example 2. Their critical properties are summarized in Table 3.

**Table 3**

| Sample | Grain size D₅₀ [µm] | Binder content [wt.-%] | Calcination temperature [°C] | Inclusion [mm²/kg] |
|---|---|---|---|---|
| 44/19 | 5 | 2.40 | 1800 | 0.053 |
| 45/19 | 5 | 2.40 | 2000 | 0.037 |

It can be seen that the 45/19 sample has a significantly lower level of inclusions than the 44/19 sample.

The increase in boron content was less with the 45/19 sample than with the 44/19 sample: 10 ppm compared to 15 ppm. Reduction in titanium was 27 ppm for the 44/19 sample and 13 ppm for the 45/19 sample, reduction in vanadium was 27 ppm with the 44/19 sample and 7 ppm with the 45/19 sample.

A long exposure test (7 days, as in the third series of tests of Example 2) showed rather few boride inclusions in the 45/19 sample.

## Claims

1. Method for increasing the average operating lifetime of cathodes in a Hall-Héroult electrolysis cell, comprising the following steps:
- providing titanium diboride granules made from titanium diboride powder, or aluminium tablets or ingots containing such titanium diboride granules,
- providing one or more holes into the crust of an operating Hall-Héroult electrolytic cell,
- introducing said granules, or at least one aluminium tablet or ingot containing said granules, through said at least one hole into said operating Hall-Héroult electrolytic cell,
wherein said titanium diboride granules present the following properties:
- they exhibit a compressive strength, measured as the maximum force before rupture in a compression test, of at least 10 N and preferably at least 20 N; and
- they are made from granules made from TiB₂ powder that has a D₅₀ value comprised between about 2 µm and about 8 µm, and preferably comprised between about 3 µm and about 7 µm, and even more preferably between about 4 µm and about 6 µm; and
- the granules have an alumina content less than about 1.5 % by weight, and preferably less than about 1.3 % by weight, and still more preferably less than about 1.2 % by weight; and
- said TiB₂ powder and/or the granular material itself has undergone calcination at a temperature above about 1 900 °C and preferably above 1 950 °C, and even more preferably at a temperature comprised between 1 950 °C and about 2 050 °C.

2. Method according to claim 1, wherein at least two of the three size parameters minimum diameter, maximum diameter, and height of said granules are comprised between about 3 mm and about 7.5 mm, preferably between about 4 mm and about 6.5 mm, and still more preferably between about 4.5 mm and about 6.0 mm.

3. Method according to claim 1 or claim 2, wherein said compression strength is above 100 N.

4. Method according to any of claims 1 to 3, wherein said D₅₀ value is comprised between about 4 µm and about 6 µm and said alumina content is less than about 1.3 % by weight.

5. Method according to claim 4, wherein said alumina content is less than about 1.2 % by weight.

6. Method according to any of claims 1 to 5, wherein said Hall-Héroult cell operates at a current higher than 400 kA, preferably higher than 460 kA, and preferably higher than 520 kA.

7. Method according to any of claims 1 to 6, wherein said steps are carried out during anode replacement.

8. Method according to any of claims 1 to 7, wherein the step of introducing is carried out for the first time after about 500 days, and preferably after about 700 days of continuous operation of the Hall-Héroult cell with new cathode blocks.

9. Method according to any of claims 1 to 8, wherein the step of introducing is carried out for the first time after about 700 days to about 1000 days of continuous operation of the Hall-Héroult cell with new cathode blocks.

10. Method according to any of claims 1 to 9, wherein a quantity of TiB₂ granules of about 5 kg to about 30 kg, preferably of about 8 kg to about 25 kg, and more preferably about 10 kg to about 20 kg, is used for each introduction through said hole.

11. Method according to any of claims 1 to 10, wherein said TiB₂ granules are contained in at least one bag upon introduction.
